# EUROPEAN PATENT APPLICATION

(11) **EP 4 582 588 A1**
(43) Date of publication of application: **09.07.2025**
(21) Application number: 23860427.6
(22) Date of filing: 30.08.2023
(51) Int. Cl.: C23C 28/00, C23C 2/06

(54) **PLATED CHECKERED STEEL PLATE**

(30) Priority: 31.08.2022 JP 2022138733
(71) Applicant: NIPPON STEEL CORPORATION, Chiyoda-ku Tokyo 100-8071 (JP)
(72) Inventor: SAITO, Mamoru, Tokyo 100-8071 (JP); GOTO, Yasuto, Tokyo 100-8071 (JP); NAKABAYASHI, Ryota, Tokyo 100-8071 (JP); MORIMOTO, Tatsuyoshi, Tokyo 100-8071 (JP)
(74) Representative: Vossius & Partner Patentanwälte Rechtsanwälte mbB
(86) International application number: PCT/JP2023/031581
(87) International publication number: WO 2024/048665

(57) **Abstract**

A coated checkered steel sheet including: a substrate checkered steel sheet having convex parts with a height of 3.0 mm or less and flat parts on one sheet surface; a coating layer that includes a zinc-based alloy layer that is arranged on the sheet surface of the substrate checkered steel sheet having the convex parts and the flat parts; and a chemical treatment coating film layer provided on a surface of the coating layer; in which a coating thickness of the chemical treatment coating film layer on the flat parts of the substrate checkered steel sheet is from 0.10 to 5.00 µm on one surface, and a coating thickness ratio of the chemical treatment coating film layer between the flat parts and the convex parts of the substrate checkered steel sheet (thickness of the chemical treatment coating film layer on the flat parts/thickness of the chemical treatment coating film layer on the convex parts) is from 0.2 to 5.0.

## Description

### Technical Field

The present disclosure relates to a coated checkered steel sheet.

### Background Art

A checkered steel sheet is a steel sheet having continuous non-slip convex parts (that is, protrusions) on surface by rolling. In general, convex parts having a constant width, a constant length, and a constant height are provided at a constant angle and a constant pitch with respect to a rolling direction. Typically, checkered steel sheets are manufactured by hot rolling. Checkered steel sheets are used for floor boards or steps of large vehicles (bus, track, etc.), floor boards of multistory parking lots, floor boards of factories, decks of ships, temporary scaffoldings or stairs in construction sites, and the like.

For example, Patent Literature 1 discloses "A method for coating a decorative surface of a substrate with a roll coater, the method including making the decorative surface of the substrate an uneven surface having an uneven pattern, making at least the surface of the coating roller of the roll coater elastic, rotating the coating roller in approximately the same speed as the transport speed of the substrate, and contacting the coating roller with a pressing force against the uneven surface."

### Cited Document

### Patent Literature

Patent Literature 1: Japanese Patent Application Laid-Open (JP-A) No. H02-17972

### SUMMARY OF INVENTION

### Technical Problem

A chemical treatment coating film layer is formed on checkered steel sheets to prevent primary rust prevention defects. Unlike general flat steel sheets, checkered steel sheets have convex parts and flat parts, which can lead to large thickness unevenness in the chemical treatment coating film layer between the convex parts and the flat parts, resulting in primary rust prevention defects.

Therefore, an object of the present disclosure is to provide a coated checkered steel sheet in which primary rust prevention defects are suppressed.

### Solution to Problem

Means for solving the problem includes the following aspects.
<1> A coated checkered steel sheet, including:
   a substrate checkered steel sheet having, on one sheet surface, convex parts with a height of 3.0 mm or less and flat parts;
   a coating layer that includes a zinc-based alloy layer and that is arranged on the sheet surface of the substrate checkered steel sheet having the convex parts and the flat parts; and
   a chemical treatment coating film layer provided on a surface of the coating layer;
   wherein a coating thickness of the chemical treatment coating film layer on the flat parts of the substrate checkered steel sheet is from 0.10 to 5.00 µm on one surface, and
   a coating thickness ratio of the chemical treatment coating film layer between the flat parts and the convex parts of the substrate checkered steel sheet (thickness of the chemical treatment coating film layer on the flat parts/thickness of the chemical treatment coating film layer on the convex parts) is from 0.2 to 5.0.
<2>
   The coated checkered steel sheet according to <1>, wherein the coating thickness ratio of the chemical treatment coating film layer between the flat parts and the convex parts of the substrate checkered steel sheet is 0.4 or more and 1.5 or less.
<3>
   The coated checkered steel sheet according to <1> or <2>, wherein a coating thickness ratio of the chemical treatment coating film layer between the flat parts and the convex parts of the substrate checkered steel sheet is 0.2 or more and less than 0.8, or 1.5 or more and 5.0 or less.

### Advantageous Effects of Invention

According to the present disclosure, it is possible to provide a coated checkered steel sheet in which a primary rust prevention defects are suppressed.

### BRIEF DESCRIPTION OF DRAWINGS

Fig. 1A is a schematic plan view showing an example of a substrate checkered steel sheet of a coated checkered steel sheet of the present disclosure.
Fig. 1B is a schematic cross-sectional view showing an example of a substrate checkered steel sheet of the coated checkered steel sheet of the present disclosure, and is a schematic cross-sectional view taken along line G-G of Fig. 1A.
Fig. 1C is a schematic cross-sectional view showing an example of a substrate checkered steel sheet of the coated checkered steel sheet of the present disclosure, and is a schematic cross-sectional view taken along line F-F of Fig. 1A.
Fig. 2 is a schematic view showing an example of a coating applicator used in the method for producing coated checkered steel sheet according to the present disclosure.
Fig. 3 is a schematic view showing an example of a groove cut applicator roll used in the method for producing coated checkered steel sheet according to the present disclosure.

### DESCRIPTION OF EMBODIMENTS

An example of the disclosure will be described hereinafter.

In the disclosure, the expression "%" with respect to the content of each element of a chemical composition means "% by mass".

Numerical ranges expressed by using "to" mean ranges in which the numerical values described before and after the "to" are included as the lower limit and the upper limit.

Numerical ranges in cases in which "more than" or "less than" accompanies a numerical value before or after the "to" mean ranges that do not include the value as the lower limit or the upper limit.

The content of an element in a chemical composition may be expressed as an element concentration (for example, Zn concentration and Mg concentration).

The coated checkered steel sheet according to the present disclosure includes a substrate checkered steel sheet having convex parts and flat parts on one sheet surface, a coating layer that includes a zinc-based alloy layer and that is disposed on the sheet surface of the substrate checkered steel sheet having the convex parts and the flat parts, and a chemical treatment coating film layer provided on the surface of the coating layer.

A coating thickness of the chemical treatment coating film layer on the flat parts of the substrate checkered steel sheet is from 0.10 to 5.00 µm on one surface.

A coating thickness ratio of the chemical treatment coating film layer between the flat parts and the convex parts of the substrate checkered steel sheet (thickness of the chemical treatment coating film layer on the flat parts/thickness of the chemical treatment coating film layer on the convex parts) is from 0.20 to 5.00.

With the above configuration, the coated checkered steel sheet according to the present disclosure is a coated checkered steel sheet in which primary rust prevention defects are suppressed.

Details of a coated checkered steel sheet according to the present disclosure will be described hereinafter.

### (Substrate Checkered Steel Sheet)

A substrate checkered steel sheet is a steel sheet on which the coating layer is formed. In the substrate checkered steel sheet, a convex part and a flat part are provided on one sheet surface.

The convex part height of the substrate checkered steel sheet (i.e., the convex height) is 3.0 mm or less. If the difference in height between the convex parts and the flat parts becomes large, the pressing force of the groove cut applicator roll for forming the chemical treatment coating film layer on the substrate checkered steel sheet becomes unstable. As a result, the chemical treatment coating solution runs out in some parts, the coating thickness ratio of the chemical treatment coating film layer between the convex parts and the flat parts increases, white rust is likely to occur, and primary rust prevention defects occur. Therefore, the height of the convex parts of the substrate checkered steel sheet is set within the above range.

The height of the convex parts of the substrate checkered steel sheet is preferably 2.5 mm or less. However, from the viewpoint of preventing slipping when used as a floor board, the lower limit of the height of the convex parts of the substrate checkered steel sheet is set to, for example, 0.5 mm or more.

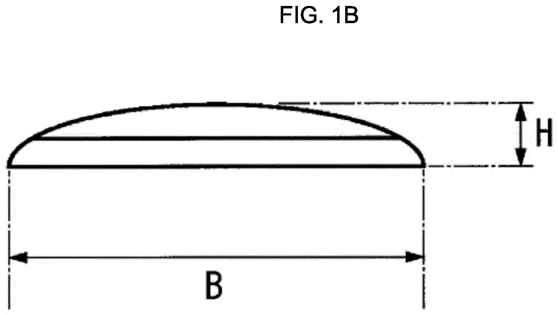

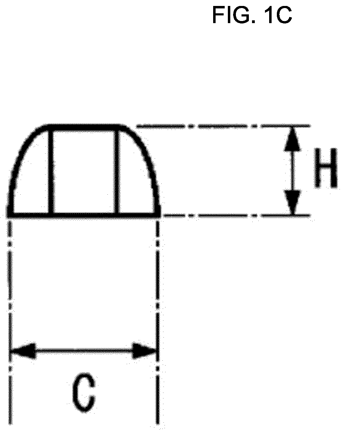

Here, the height of the convex part of the substrate checkered steel sheet is the height of the center in the length direction and of the center in the width direction of the convex part (see H in Figs. 1B and 1C).

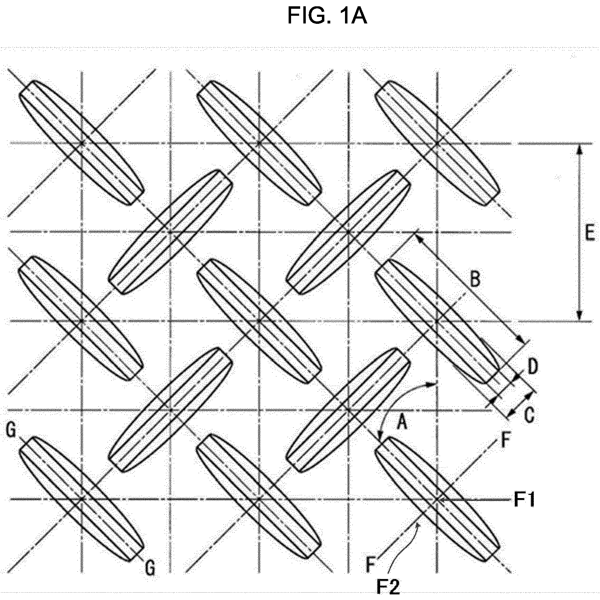

Other shapes of the substrate checkered steel sheets are, for example, as shown in Figs. 1A to 1C. In Fig. 1, A, B, C, D, and E are as follows, respectively.
A: Arrangement angle of the convex parts (angle of the convex parts in the length direction relative to the rolling direction) = from 35° to 55° (preferably 40° to 50°)
B: Length of convex parts = from 15 to 50 mm (preferably 20 to 40 mm)
C: Maximum width of convex parts = from 3 to 8 mm (preferably 4 to 7 mm)
D: Minimum width of convex parts = from 0.5 to 6 mm (preferably 1 to 4 mm)
E: Arrangement pitch of convex parts (the distance between the positions of the centers of convex parts in the length direction and in the width direction along the rolling direction) = from 15 to 50 mm (preferably from 20 to 40 mm)

The area occupancy rate of the convex parts is from 10 to 70% (preferably from 15 to 60%)

The substrate checkered steel sheet is usually provided with a shape of a convex part by hot rolling. A steel type of the substrate checkered steel sheet is not particularly limited. Examples of the substrate checkered steel sheet include a steel type corresponding to a rolled steel material for general structure defined in JIS G3101:2015.

A convex shape of the substrate checkered steel sheet is imparted, for example, by transferring a concave shape formed on a working roll to a steel sheet surface at a finishing stage of hot rolling.

A sheet surface on an opposite side facing the sheet surface provided with the convex part and the flat part in a sheet thickness direction is a surface having a surface property of a normal steel sheet. Specifically, the sheet surface on the opposite side facing the sheet surface provided with the convex part and the flat part in the sheet thickness direction is, for example, a sheet surface applied by a normal rolling roll (that is, a roll having normal roughness) facing an operating roll on which the convex part and the flat part are provided at the finishing stage of hot rolling.

The substrate checkered steel sheet may be a pre-coated pre-coated checkered steel sheet. The pre-coated checkered steel sheet is obtained by, for example, an electrolytic treatment method or a displacement coating method. In the electrolytic treatment method, a pre-coated checkered steel sheet is obtained by immersing a substrate checkered steel sheet in a sulfate bath or a chloride bath that contains metal ions of various pre-coating components and carrying out an electrolytic treatment. In the displacement coating method, a pre-coated checkered steel sheet is obtained by immersing a substrate checkered steel sheet in an aqueous solution that contains metal ions of various pre-coating components and whose pH is adjusted with sulfuric acid and effecting displacement precipitation of the metals.

A Ni pre-coated checkered steel sheet is a representative example of a pre-coated checkered steel sheet.

### (Coating Layer)

The coating layer includes a zinc-based alloy layer.

A deposited amount of the coating layer is preferably from 60 to 500 g/m² on one surface.

When the deposited amount of the coating layer is 60 g/m² or more, corrosion resistance can be secured more reliably. When the deposited amount of the coating layer is 500 g/m² or less, appearance defects such as sagging patterns of the coating layer can be suppressed. Therefore, the deposited amount of the zinc-based coating layer is set within the above range.

From the viewpoint of improving corrosion resistance, the deposited amount of the coating layer is more preferably from 90 to 460 g/m², and further preferably from 100 to 400 g/m².

The deposited amount of the coating layer is measured as follows.

A sample of 50 mm x 50 mm is cut out from the coated checkered steel sheet to be measured, and the sheet surface opposite the sheet surface having the convex parts and the flat parts in the sheet thickness direction is sealed with tape. Thereafter, the sample is immersed in hydrochloric acid containing an inhibitor that suppresses the dissolution of iron, thereby dissolving the coating on the sheet surface where the convex parts and the flat parts are formed. The difference in weight before and after dissolution is divided by the area of the sample (50 mm x 50 mm) to calculate the deposited amount of coating. This is done three times and the average value is taken.

The zinc-based alloy layer is an alloy layer containing zinc and aluminum. It may further contain one or more elements selected from the group consisting of magnesium and silicon. Specifically, examples of the zinc-based alloy layer include well-known zinc-based alloy layers such as a zinc-aluminum alloy layer, a zinc-aluminum-magnesium alloy layer, a zinc-aluminum-magnesium-silicon alloy layer, and a zinc-aluminum-silicon alloy layer.

The zinc-based alloy layer may be a coating layer containing small amounts of cobalt, molybdenum, tungsten, nickel, titanium, calcium, chromium, manganese, iron, lead, bismuth, antimony, tin, copper, cadmium, arsenic, etc. as additive elements or impurities.

In particular, from the viewpoint of corrosion resistance, the zinc-based alloy layer is preferably an alloy layer containing zinc, aluminum and magnesium.

The coating layer may include an Al-Fe alloy layer in addition to the zinc-based alloy layer. The Al-Fe alloy layer is disposed between the substrate checkered steel sheet and the zinc-based alloy layer.

That is, the coating layer may be a single-layer structure of a zinc-based alloy layer, or a laminate structure including a zinc-based alloy layer and an Al-Fe alloy layer. In the case of the laminate structure, the zinc-based alloy layer is a layer that constitutes the surface of the coating layer.

However, although an oxide film of an element constituting the coating layer is formed to about 50 nm on a surface of the coating layer, the oxide film is thin with respect to a thickness of the entire coating layer and considered not to constitute a main subject of the coating layer.

The Al-Fe alloy layer may be formed on the surface of the substrate checkered steel sheet (specifically, between the substrate checkered steel sheet and the zinc-based coating layer), and is a layer having a structure in which an Al₅Fe phase is a main phase. The Al-Fe alloy layer is formed by mutual atomic diffusion between the substrate checkered steel sheet and the coating bath. Since a checkered steel sheet according to the present disclosure forms a coating layer by a hot-dip coating method, an Al-Fe alloy layer is easily formed in the coating layer containing the Al element. Since Al of a certain concentration or more is contained in the coating bath, the Al₅Fe phase is formed most. However, the atomic diffusion takes time, and there may be a part where the Fe concentration is high in the vicinity of the substrate checkered steel sheet. Thus, the Al-Fe alloy layer may partially contain a small amount of an Al-Fe phase, an Al₃Fe phase, an Al₅Fe₂ phase, or the like. In addition, since the coating bath also contains Zn at a certain concentration, the Al-Fe alloy layer also contains a small amount of Zn.

Here, in a case in which Si is contained in the coating layer, the Si is particularly easily incorporated into the Al-Fe alloy layer, and an Al-Fe-Si intermetallic compound phase may be formed. Examples of the intermetallic compound phase to be identified include AlFeSi phases, and α, β, q1, q2-AlFeSi phases and the like exist as isomers. Thus, these AlFeSi phases and the like may be detected in the Al-Fe alloy layer. Such an Al-Fe alloy layer including these AlFeSi phases and the like is also referred to as an Al-Fe-Si alloy layer. Since the Al-Fe-Si alloy layer also has a smaller thickness than the coating layer, the influence on corrosion resistance in the entire coating layer is small.

In a case in which any of various pre-coated checkered steel sheet is used as a substrate checkered steel sheet, a structure of the Al-Fe alloy layer may change depending on the deposited amount of the pre-coating. Specifically, there are a case where a pure metal layer used for pre-coating remains around the Al-Fe alloy layer, a case where an intermetallic compound phase (for example, when a Ni pre-coated checkered steel sheet is used, an Al₃Ni phase or the like is used.) in which a constituent component of the coating layer and a pre-coating component are bonded forms an alloy layer, a case where an Al-Fe alloy layer in which a part of Al atoms and Fe atoms is substituted is formed, or a case where an Al-Fe-Si alloy layer in which a part of Al atoms, Fe atoms, and Si atoms is substituted is formed, and the like. In any case, these alloy layers are also thinner than the Zn-Al-Mg alloy layer, therefore have little effect on the corrosion resistance of the entire coating layer.

The coating layer preferably has a chemical composition containing, in % by mass:
Al: from more than 0.1% to less than 25.0%,
Mg: from 0% to less than 12.5%,
Sn: from 0% to 5.0%,
Bi: from 0% to less than 5.0%,
In: from 0% to less than 2.0%,
Ca: from 0% to 3.00%,
Y: from 0% to 0.5%,
La: from 0% to less than 0.5%,
Ce: from 0% to less than 0.5%,
Si: from 0% to less than 2.5%,
Cr: from 0% to less than 0.25%,
Ti: from 0% to less than 0.25%,
Zr: from 0% to less than 0.25%,
Mo: from 0% to less than 0.25%,
W: from 0% to less than 0.25%,
Ag: from 0% to less than 0.25%,
P: from 0% to less than 0.25%,
Ni: from 0% to less than 0.25%,
Co: from 0% to less than 0.25%,
V: from 0% to less than 0.25%,
Nb: from 0% to less than 0.25%,
Cu: from 0% to less than 0.25%,
Mn: from 0% to less than 0.25%,
Li: from 0% to less than 0.25%,
Na: from 0% to less than 0.25%,
K: from 0% to less than 0.25%,
Fe: from 0% to 5.0%,
Sr: from 0% to less than 0.5%,
Sb: from 0% to less than 0.5%,
Pb: from 0% to less than 0.5%,
B: from 0% to less than 0.5%, and
remaining: Zn and impurities.

The above chemical composition improves corrosion resistance.

In the chemical composition of the coating layer, Mg, Sn, Bi, In, Ca, Y, La, Ce, Si, Cr, Ti, Zr, Mo, W, Ag, P, Ni, Co, V, Nb, Cu, Mn, Li, Na, K, Fe, Sr, Sb, Pb, and B are optional components. That is, these elements need not be contained in the coating layer.

Here, the chemical composition of the coating layer is the average chemical composition of the entire coating layer (in a case in which the coating layer has a single-layer structure of a zinc-based alloy layer, the average chemical composition of the zinc-based alloy layer, and in a case in which the coating layer has a multilayer structure of a zinc-based alloy layer and an Al-Fe alloy layer, the total average chemical composition of the zinc-based alloy layer and the Al-Fe alloy layer).

Usually, in the hot-dip coating method, the chemical composition of the zinc-based alloy layer is almost the same as the chemical composition of the coating bath because the formation reaction of the coating layer is almost completed in the coating bath. In the hot-dip coating method, the Al-Fe alloy layer is instantaneously formed and grown immediately after immersion in the coating bath. The formation reaction of the Al-Fe alloy layer is completed in the coating bath, and the thickness of the Al-Fe alloy layer is often sufficiently smaller than that of the zinc-based alloy layer.

Therefore, unless a special heat treatment such as a heat alloying treatment is performed after coating, the average chemical composition of the entire coating layer is substantially equal to the chemical composition of the zinc-based alloy layer, and the components of the Al-Fe alloy layer can be ignored.

The chemical components of the coating layer are measured by the following method.

First, an acid solution in which the coating layer has been peeled off and dissolved with an acid containing an inhibitor that inhibits corrosion of the substrate checkered steel sheet is obtained. Next, the obtained acid solution is measured by an ICP analysis, whereby the chemical composition of the coating layer (in a case in which the coating layer has a single-layer structure of a zinc-based alloy layer, the chemical composition of the zinc-based alloy layer, in a case in which the coating layer has a multilayer structure of an Al-Fe alloy layer and a zinc-based alloy layer, the total chemical composition of the Al-Fe alloy layer and the zinc-based alloy layer) can be obtained. The kind of the acid is not particularly limited as long as it is an acid capable of dissolving the coating layer. The chemical composition is measured as the average chemical composition. In ICP analysis, the Zn concentration is determined according to "Formula: Zn concentration = 100% - concentrations (%) of other elements".

Here, in a case in which a pre-coated checkered steel sheet is used as the substrate checkered steel sheet, the components of the pre-coating are also detected.

For example, in a case in which a Ni pre-coated checkered steel sheet is used, not only Ni in the coating layer but also Ni in the Ni pre-coating is detected by ICP analysis. Specifically, for example, in a case in which a pre-coated checkered steel sheet having a Ni deposited amount of from 1 g/m² to 3 g/m² is used as the substrate checkered steel sheet, even when the concentration of Ni contained in the coating layer is 0%, the Ni concentration is detected as from 0.1 to 15%. On the other hand, in a case in which a Ni pre-coated checkered steel sheet is used as the substrate checkered steel sheet, a trace amount of Ni in a Ni pre-coating layer is dissolved in a coating bath when the substrate checkered steel sheet is immersed in the coating bath. Thus, the Ni concentration in the coating bath is from 0.02 to 0.03% higher than the Ni concentration in the coating bath that is initially made-up. Accordingly, in a case in which a Ni pre-coated checkered steel sheet is used, a Ni concentration in the coating layer is increased by 0.03% at the maximum.

A method of determining whether or not the substrate checkered steel sheet is a pre-coated checkered steel sheet is as follows.

A sample whose measurement surface is a cross section of cutting edge taken along a sheet thickness direction of a coated checkered steel sheet is collected from the target coated checkered steel sheet.

A vicinity of an interface between the coating layer and the substrate checkered steel sheet in the coated checkered steel sheet on a measurement surface of a sample is linearly analyzed by an Electron Probe MicroAnalyser (FE-EPMA) to measure the Ni concentration. The measurement conditions are an acceleration voltage of 15 kV, a beam diameter of about 100 nm, an irradiation time per point of 1,000 ms, and a measurement pitch of 60 nm. A measurement distance may be any distance as long as it can be confirmed whether or not the Ni concentration is concentrated at an interface between the coating layer and the substrate checkered steel sheet in the coated checkered steel sheet.

When the Ni concentration is concentrated at the interface between the coating layer and the substrate checkered steel sheet in the coated checkered steel sheet, the substrate checkered steel sheet is discriminated as a pre-coated checkered steel sheet.

When a Ni pre-coated checkered steel sheet is used as the substrate checkered steel sheet, the Ni concentration of the coating layer is defined as the value measured as follows.

First, using a high frequency glow discharge surface area analyzer (GDS: manufactured by HORIBA, Ltd., model number: GD-Profiler2), the Ni emission intensity is measured for three or more kinds of standard samples having different Ni concentrations (Zn alloy standard samples IMN ZH1, ZH2, ZH4 manufactured by BAS Inc.). A calibration curve is created from the relationship between the obtained Ni emission intensity and the Ni concentration of the standard sample.

Next, the Ni emission intensity at a position of 1/2 of a coating layer coating thickness of a coated checkered steel sheet to be measured (the sheet surface opposite in the sheet thickness direction to the sheet surface on which the convex parts and flat parts are provided) is measured using a high frequency glow discharge surface area analyzer (GDS: manufactured by HORIBA, Ltd., model number: GD-Profiler2) under the conditions. The Ni concentration at the position of 1/2 of the coating layer is determined from the obtained Ni emission intensity and the prepared calibration curve. The Ni concentration at the obtained 1/2 position of the coating layer is defined as the Ni concentration of the coating layer.

When a Ni pre-coated checkered steel sheet is used as the substrate checkered steel sheet, the Zn concentration of the coating layer is defined as the Zn concentration calculated by the following formula. Zn concentration = 100 - (concentration of elements other than Zn and Ni in ICP analysis + Ni concentration measured by GDS)

Measurement conditions of the high frequency glow discharge surface area analyzer are as follows.
- H.V.: 630V
- Anode diameter: φ4 mm
- Gas: Ar
- Gas pressure: 600 Pa
- Output: 35 W

### (Chemical Treatment Coating Film Layer)

A coating thickness of the chemical treatment coating film layer on the flat parts of the substrate checkered steel sheet is from 0.10 to 5.00 µm on one surface.

If the coating thickness of the chemical treatment coating film layer on the flat parts is thin, white rust will occur locally, resulting in poor primary rust prevention. If the coating thickness of the chemical treatment coating film layer on the flat part is thick, the chemical treatment coating film layer will crack, resulting in poor primary rust prevention. Therefore, the coating thickness of the chemical treatment coating film layer on the flat part of the substrate checkered steel sheet is set within the above range.

From the viewpoint of improving primary rust prevention, the coating thickness of the chemical treatment coating film layer on the flat part of the substrate checkered steel sheet is preferably from 0.20 to 4.00 µm, and more preferably from 0.30 to 3.00 µm.

Here, the coating thickness of the chemical treatment coating film layer on the flat part is the coating thickness of the chemical treatment coating film layer on the flat part 3 mm away from the convex part (the coating thickness of the chemical treatment coating film layer at the position indicated by F2 in Fig. 1A).

The coating thickness ratio of the chemical treatment coating film layer between the flat parts and the convex parts of the substrate checkered steel sheet (coating thickness of the chemical treatment coating film layer on the flat parts/coating thickness of the chemical treatment coating film layer on the convex parts) is from 0.2 to 5.0.

If the coating thickness ratio of the chemical treatment coating film layer between the flat parts and the convex parts is too low, the convex parts will be thick and the flat parts will be thin, which will make the coating more likely to have defects on the flat parts, resulting in localized white rust and poor primary rust prevention.

If the coating thickness ratio of the chemical treatment coating film layer between the flat parts and the convex parts is too high, the coating thickness of the chemical treatment coating film layer will become uneven to a large extent, causing white rust to occur locally, resulting in poor primary rust prevention. Therefore, the coating thickness ratio of the chemical treatment coating film layer on the flat parts to that on the convex parts is set within the above range.

From the viewpoint of improving primary rust prevention, the coating thickness ratio of the chemical treatment coating film layer on the flat parts to that on the convex parts is preferably from 0.3 to 4.0, and more preferably from 0.4 to 3.0.

Here, when using the coated checkered steel sheet of the present disclosure, it is preferable to control the coating thickness of the chemical treatment coating film layer formed on the convex parts and flat parts. The chemical treatment coating film layer is usually a transparent coating films layer several micrometers thick, which is located on the surface of the metal layer that reflects light. Therefore, the refraction of light caused by the coating thickness of the chemical treatment coating film layer may result in interference colors. The interference colors are red, yellow, green, or other colors, and appear as patterns in various parts of the coated checkered steel sheet, causing poor appearance.

In order to make the appearance quality of coated checkered steel sheet as consistent as possible, the coating thickness of the chemical treatment coating film layer on the convex parts and the flat parts is made as similar as possible, resulting in a uniform appearance and eliminating pattern-like phenomena such as color spots.

Therefore, from the viewpoint of suppressing the phenomena of appearing as patterns such as color spots, the coating thickness ratio of the chemical treatment coating film layer on the flat parts to the convex parts is most preferably 1.0, more preferably 0.4 or more and 1.5 or less, and even more preferably 0.8 or more and 1.1 or less.

When the coating thickness ratio of the chemical treatment coating film layer on the flat part and the convex part is set as above, the color will be of the same color family.

On the other hand, the coated checkered steel sheet of the present disclosure may be cut, bent, and arc-welded to various members to be made into structures such as parking lot pallets, staircase steps. In particular, the coating thickness control of the chemical treatment coating film layer affects the arc welding.

Generally, coated checkered steel sheet requires a larger welding current than hot-rolling checkered steel sheet without a coating layer, which may result in welding defects.

In particular, when a chemical treatment coating film layer is formed on a coating layer, the following problems may occur.
(1) The current becomes unstable, and the bead formed during arc welding becomes unstable.
(2) Spatter marks caused by large currents become severe.
(3) Damage to the chemical treatment coating film layer causes the area after welding to spread more than necessary.
(4) Welding fumes become intense due to the gas vaporized from the chemical treatment coating film layer.
(5) Foreign matter appears in the bead.

In particular, the shape of the bead greatly affects the strength of the structure obtained from the coated checkered steel sheet.

Therefore, in order to reduce the effect of bead shape, specifically, fume gases generated during welding should be allowed to escape properly and prevented from being taken up into the bead. From this viewpoint, coated checkered steel sheet requires a larger current value than hot-rolling steel sheet, making welding more difficult, and when the chemical treatment coating film layer is formed uniformly, generally the energization itself tends to be difficult. On the other hand, when the coating thickness ratio between flat parts and convex parts is large, there are regions in which the chemical treatment coating film layer is partially thin. This makes it relatively easy for the arc to be stable, and the shape of the bead is stable.

Therefore, when the coating thickness ratio of the chemical treatment coating film layer on the flat parts to the convex parts is 1.0, it is the least suitable for arc weldability. From the viewpoint of stabilizing the shape of the bead during welding, the coating thickness ratio of the chemical treatment coating film layer on the flat parts to the convex parts is preferably less than 0.8 or 1.5 or more, and more preferably less than 0.6 or 1.9 or more.

That is, from the viewpoint of suppressing primary rust prevention defects and stabilizing the shape of the bead during welding, the coating thickness ratio of the chemical treatment coating film layer between the flat parts and the convex parts is preferably 0.2 or more and less than 0.8, or 1.5 or more and 5.0 or less, and more preferably 0.2 or more and less than 0.6, or 1.9 or more and 5.0 or less.

Here, the coating thickness of the chemical treatment coating film layer on the convex part is the coating thickness of the chemical treatment coating film layer at the center in the length direction and the center in the width direction of the convex part (the coating thickness of the chemical treatment coating film layer at the position indicated by F1 in Fig. 1A).

Here, the coating thickness of the chemical treatment coating film layer is measured as follows.

The coated checkered steel sheet to be measured is cut in the thickness direction of the coated checkered steel sheet at the center in the length direction of the convex part and along the width direction of the convex part to obtain a sample. Specifically, the coated checkered steel sheet is cut at a position corresponding to the cross section along line F-F in Fig. 1A to obtain a sample.

Next, a gold film is vapor-deposited on the surface of the chemical treatment coating film layer of the sample.

The sample is then embedded in epoxy resin and polished to the observation position.

The cut cross section of the polished sample is then observed under a scanning electron microscope (SEM) at 10,000 times magnification.

On the observed cross section, the coating thickness of the chemical treatment coating film layer is then measured at each position as follows. Note that the thickness of the chemical treatment coating film layer at each position is measured by measuring the coating thickness of the layer between the coating layer and the gold film.
(1) The coating thickness of the chemical treatment coating film layer at the center in the length direction and the center in the width direction of the convex part (the coating thickness of the chemical treatment coating film layer at the position indicated by F1 in Fig. 1A).
(2) The coating thickness of the chemical treatment coating film layer at a flat part 3 mm away from the convex part (the coating thickness of the chemical treatment coating film layer at the position indicated by F2 in Fig. 1A)

The operation is carried out three times, and the average coating thickness of the chemical treatment coating film layer at each position is calculated.

The components of the chemical treatment coating film layer are not particularly limited, and well-known components may be used.

Examples of the chemical treatment coating film layer include well-known chemical treatment coating film layers containing, as main components, a silane coupling agent (organo-silicon compounds), a zirconium compound, a titanium compound, a phosphate compound, a fluorine compound, a vanadium compound, a cobalt compound, ammonium zirconium carbonate, an acrylic resin, a vanadium compound, or a phosphorus compound. The main component refers to the component that is most abundant in the layer.

However, from the viewpoint of reducing the environmental load, the chemical treatment coating film layer is preferably a chemical treatment coating film layer other than a chromate chemical treatment coating film layer.

From the viewpoint of suppressing poor primary rust prevention defects, the following coating film layers are specifically preferred as the chemical treatment coating film layer, for example.
(1) A coating film layer including a silane coupling agent containing one amino group in the molecule, a organo-silicon compounds containing two or more functional groups (a) represented by the formula -SiR¹R²R (wherein R¹, R² and R³ each independently represent an alkoxy group or a hydroxyl group, at least one of which represents an alkoxy group) in the molecule obtained by blending a silane coupling agent containing one glycidyl group in the molecule, and one or more of at least one kinds of hydrophilic functional groups (b) selected from a hydroxyl group (separate from those that may be contained in the functional group (a)) and an amino group, at least one fluoro compound selected from titanium hydrofluoric acid or zirconium hydrofluoric acid, phosphoric acid, and a vanadium compound.
(2) A coating film layer including one or two kinds of an organosilicon compound, a zirconium compound and a titanium compound, a phosphate compound, a fluorine compound and a vanadium compound.
(3) A coating film layer including acrylic resin, zirconium, vanadium, phosphorus, and cobalt.
(4) A coating film layer including a zirconium carbonate compound, an acrylic resin obtained by copolymerizing monomer components including at least styrene, (meth)acrylic acid, an (meth)acrylic acid alkyl ester, and acrylonitrile, a divalent to tetravalent vanadium compound, a phosphorus compound, and a cobalt compound (E).

### (Method for Manufacturing Coated Checkered Steel Sheet)

Next, an example of a method for manufacturing coated checkered steel sheet according to the present disclosure will be described.

Hereinafter, the manufacturing method for the coated checkered steel sheet of the present disclosure, which will be described as an example below, is particularly suitable for manufacturing a coated checkered steel sheet using a substrate checkered steel sheet having the shape shown in Figs. 1A to 1C and in which the arrangement angle A of the convex parts, the length B of the convex parts, the maximum width C of the convex parts, the minimum width D of the convex parts, the arrangement pitch E of the convex parts, the height H of the convex parts, and the area occupancy rate of the convex parts fall within the above ranges.

The manufacturing method for the coated checkered steel sheet of the present disclosure includes a coating layer forming step and a chemical treatment coating films forming step.

### -Coating Layer Forming Step-

In the coating layer forming step, a coating layer including a zinc-based alloy layer is formed on one sheet surface of a substrate checkered steel sheet having convex parts and flat parts with a height of 3 mm or less, with a deposited amount of the coating layer of from 60 to 500 g/m² on one surface on the sheet surface on which the convex parts and flat parts are provided.

The method for forming the coating layer is not particularly limited, and any well-known method may be used.

For example, a substrate checkered steel sheet is heated to and held at a temperature 20°C higher than the coating bath temperature and 850°C higher than the coating bath temperature, and then cooled to a temperature within a range of a temperature higher than the coating bath temperature and a temperature higher than the coating bath temperature + 10°C, both inclusive. The cooled substrate checkered steel sheet is then immersed in the coating bath and removed from the coating bath. If the temperature of the coating bath is higher than 500°C, the sheet is then cooled to 500°C at a cooling rate of from 1 to 20°C/s to form a coating layer on the substrate checkered steel sheet.

Here, the coating is performed by a continuous hot-dip metal coating method such as the Sendzimir method. Also, after pickling and before heating, the substrate checkered steel sheet may be pre-coated (for example, Ni pre-coated).

### -Chemical Treatment Coating Films Forming Step-

In the chemical treatment coating films forming step, a groove cut applicator roll is used which has a plurality of circumferential grooves arranged in the axial direction on the outer peripheral surface, with a groove pitch of from 0.2 to 1.0 mm, a groove height of from 0.05 to 0.5 mm, and a ratio of groove pitch to groove height (groove pitch/groove height) of from 2 to 8, a chemical treatment coating film layer is formed by applying a chemical treatment coating solution (hereinafter also referred to as "chemical solution") to the surface of the coating layer with the circumferential direction of the groove cut applicator roll at an angle within the range of 45±10° to the length direction of the convex parts of the substrate checkered steel sheet.

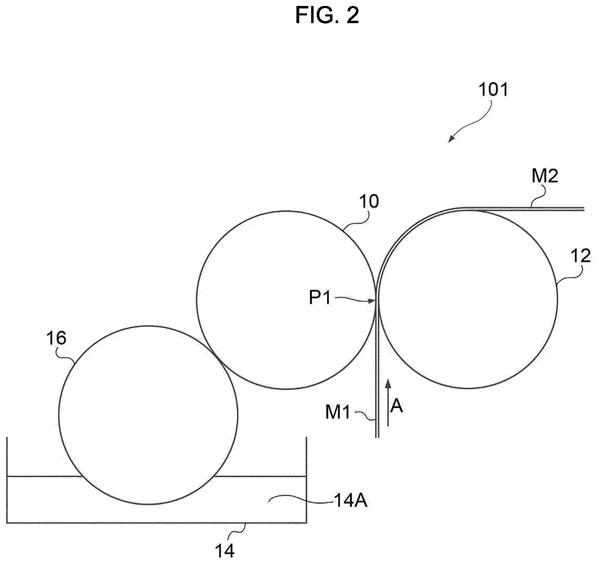

Specifically, in the chemical treatment coating films forming step, for example, a coating applicator shown in Fig. 2 is used to coat the surface of the coating layer with a chemical treatment coating solution to form a chemical treatment coating film layer. However, the coating applicator may be any known coating applicator having a groove cut applicator roll.

The coating applicator shown in Fig. 2 includes a groove cut applicator roll that applies a chemical solution to the surface of the coating layer of the substrate checkered steel sheet by transfer, and a backup roll that is arranged opposite the substrate checkered steel sheet and supports the substrate checkered steel sheet as it passes through. Instead of the backup roll, an applicator roll may be provided on the opposite side. In this case, from the viewpoint of coatability on the opposite side, the substrate checkered steel sheet is made to travel in a straight line without changing the direction of travel by the roll.

Around the groove cut applicator roll, a storage pan for storing the chemical solution and a pickup roll for picking up the chemical solution from the storage pan and then supplying the chemical solution to the groove cut applicator roll is provided. A transfer roll may be disposed between the pickup roll and the applicator roll.

In Fig. 2, 101 indicates a coating applicator, 10 indicates a groove cut applicator roll, 12 indicates a backup roll, 14 indicates a storage pan, 14A indicates a chemical treatment coating solution, 16 indicates a pick-up roll, M1 indicates a substrate checkered steel sheet on which a coating layer is formed, M2 indicates a substrate checkered steel sheet on which a chemical treatment coating film and a coating layer are formed, and A indicates the sheet rolling direction of the substrate checkered steel sheet on which a coating layer is formed.

The groove cut applicator roll may be, for example, an applicator roll having a metal roll and a rubber coating layer provided on the outer circumferential surface of the metal roll

The groove cut applicator roll has a plurality of circumferentially extending grooves arranged in the axial direction on its outer peripheral surface.

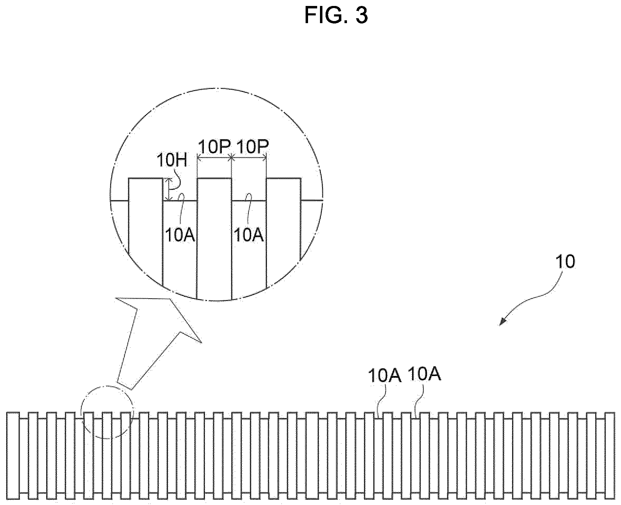

In the groove cut applicator roll, the groove pitch (see 10P in Fig. 3) is from 0.2 to 1.0 mm, the groove height (see 10H in Fig. 3) is from 0.05 to 0.5 mm, and the ratio of the groove pitch to the groove height (groove pitch/groove height) is from 2 to 8.

Here, the groove pitch means both the groove width and the width of the convex part formed between adjacent grooves. Usually, in a groove cut applicator roll, the groove width and the width of the convex part formed between adjacent grooves are often the same.

In Fig. 3, 10 indicates a groove cut applicator roll, 10A indicates a groove, 10P indicates a groove pitch, and 10H indicates a groove height.

When the groove pitch is set to 0.2 mm or more and 1.0 mm or less, the removed amount of chemical solution becomes appropriate.

When the groove height is 0.05 mm or more, the removed amount of chemical solution becomes appropriate. When the groove height is set to 0.5 mm or less, the inflow of air through the groove is suppressed.

Furthermore, by setting the ratio of groove pitch to groove height in the groove cut applicator roll to be 2 or more and 8 or less, the removed amount of chemical treatment coating solution is secured, and the chemical solution can be uniformly applied to the convex parts, flat parts, and boundaries between the convex parts and the flat parts (i.e., the base of the convex part) of the substrate checkered steel sheet.

By using such a groove cut applicator roll, the coating thickness of the chemical treatment coating film layer on the flat parts of the substrate checkered steel sheet and the coating thickness ratio of the chemical treatment coating film layer on the flat parts and the convex parts of the substrate checkered steel sheet are within the above ranges. As a result, white rust is less likely to occur, and primary rust prevention defects are suppressed.

In a groove cut applicator roll, it is desirable that the ratio of the maximum width of the convex parts of the substrate checkered steel sheet (see C in Fig. 1A) to the pitch of the grooves (maximum width of the convex parts of the substrate checkered steel sheet/groove pitch) is, for example, from 3.0 to 40.0.

When the ratio of the maximum width of the convex parts of the substrate checkered steel sheet to the pitch of the grooves is set to 3.0 or more, the pitch of the grooves is not too large relative to the maximum width of the convex parts of the substrate checkered steel sheet. Therefore, the grooves that hold the chemical solution are also close to the boundaries between the convex parts and the flat parts of the substrate checkered steel sheet (i.e., the bases of the convex parts), making it easier for the chemical solution to be applied and spread.

When the ratio of the maximum width of the convex parts of the substrate checkered steel sheet to the pitch of the grooves is set to 40.0 or less, the pitch of the grooves is not too small relative to the maximum width of the convex parts of the substrate checkered steel sheet. This suppresses the grooves that hold the chemical solution from becoming difficult to approach the boundary between the convex parts and the flat parts of the substrate checkered steel sheet (i.e., the base of the convex part), and also ensures the removed amount of the chemical solution. As a result, insufficient application of the chemical solution is suppressed.

Therefore, in the groove cut applicator roll, it is preferable that the ratio of the maximum width of the convex part of the substrate checkered steel sheet to the pitch of the grooves is within the above range. The removed amount of chemical treatment coating solution is secured, and the chemical solution can be easily applied uniformly to the convex parts, flat parts and boundaries between the convex parts and flat parts (i.e., the bases of the convex parts) of the substrate checkered steel sheet.

This makes it easier for the coating thickness of the chemical treatment coating film layer on the flat parts of the substrate checkered steel sheet, and the coating thickness ratio of the chemical treatment coating film layer on the flat parts and the convex parts of the substrate checkered steel sheet, to fall within the above ranges. As a result, white rust is less likely to occur, and primary rust prevention defects are further suppressed.

In the chemical treatment coating films forming step, the groove cut applicator roll is rotated, the chemical treatment coating solution is picked up by a pickup roll from a storage pan in which the chemical treatment coating solution is stored, and the chemical treatment coating solution is then supplied to the groove cut applicator roll.

After or at the same time as starting the supply of the chemical treatment coating solution to the groove cut applicator roll, the passing of the substrate checkered steel sheet is started, and the chemical treatment coating solution supplied by the groove cut applicator roll is transferred and applied to the coating layer surface of the substrate checkered steel sheet as it passes through.

In the chemical treatment coating film layer forming step, the circumferential direction of the groove cut applicator roll is at an angle within the range of 45±10° to the length direction of the convex parts of the substrate checkered steel sheet to apply a chemical treatment coating solution to the surface of the coating layer.

By setting the circumferential direction of the groove cut applicator roll at an angle within the range of 45±10° relative to the length direction of the convex parts of the substrate checkered steel sheet, it is possible to make the height of the convex parts (i.e., the convex height) uniform in the width direction of the substrate checkered steel sheet (i.e., the direction perpendicular to the rolling direction of the substrate checkered steel sheet).

Therefore, the contact area between the convex parts and the roll is constant in the width direction of the groove cut applicator roll, the pressing force of the groove cut applicator roll on the substrate checkered steel sheet is uniform, and the chemical solution can be uniformly applied to the convex parts, flat parts, and the boundaries between the convex parts and flat parts (i.e., the bases of the convex parts) of the substrate checkered steel sheet.

Thereby, the coating thickness of the chemical treatment coating film layer on the flat parts of the substrate checkered steel sheet and the coating thickness ratio of the chemical treatment coating film layer on the flat parts and the convex parts of the substrate checkered steel sheet fall within the above ranges. As a result, white rust is less likely to occur, and primary rust prevention defects are suppressed.

From the viewpoint of ensuring that the coating thickness of the chemical treatment coating film layer on the flat parts of the substrate checkered steel sheet and the coating thickness ratio of the chemical treatment coating film layer on the flat parts and the convex parts of the substrate checkered steel sheet are within the above ranges, the linear pressure of the groove cut applicator roll against the substrate checkered steel sheet is preferably from 1000 to 3000 (g/mm).

The rotation direction of the groove cut applicator roll may be the same as the rolling direction of the substrate checkered steel sheet, or may be opposite to the rolling direction of the substrate checkered steel sheet. However, it is better if the rotation direction of the groove cut applicator roll is opposite to the rolling direction of the substrate checkered steel sheet. If the rotation direction of the groove cut applicator roll is opposite to the rolling direction of the substrate checkered steel sheet, uneven application of the chemical solution is suppressed when the chemical treatment coating solution is applied, and unevenness in the coating thickness of the chemical treatment coating film layer is also suppressed.

The rotation direction of the groove cut applicator roll refers to the direction at the position facing the substrate checkered steel sheet (i.e., coating material application position P1 in Fig. 2).

The amount of chemical solution supplied to the groove cut applicator roll is appropriately set depending on the coating thickness of the chemical treatment coating film layer. The rotation speed of the groove cut applicator roll is also appropriately set according to the coating thickness of the chemical treatment coating film layer to be formed on the coating layer surface of the substrate checkered steel sheet.

The passing speed LS of the substrate checkered steel sheet is, for example, from 20 to 200 m/min.

A coating film of a chemical solution is formed on the surface of the coating layer on the substrate checkered steel sheet, and then the coating film is dried and/or cured to form a chemical treatment coating film layer.

The drying and curing conditions for the coating film of the chemical solution may be appropriately set depending on the chemical solution used.

Hereinafter, post-processing that can be applied to the coated checkered steel sheet of the present disclosure will be described.

On the chemical treatment coating film layer in the coated checkered steel sheet of the present disclosure, there may be one or more organic resin coating films layers. The kind of the organic resin is not particularly limited, and examples thereof include polyester resins, polyurethane resins, epoxy resins, acrylic resins, polyolefin resins, fluoro resins, and denatured product of these resins. Here, the denatured product refers to a resin obtained by reacting a reactive functional group contained in the structure of these resins with another compound (a monomer, a crosslinking agent, or the like) that has, in the structure thereof, a functional group capable of reacting with the aforementioned functional group.

As such an organic resin, one kind or a mixture of two or more kinds of (unmodified) organic resins may be used, or one kind or a mixture of two or more kinds of organic resins obtained by modifying at least one kind of organic resin in the presence of at least one other kind of organic resin may be used. The organic resin film may contain an optional coloring pigment or rust preventive pigment. A water-based form prepared by dissolution or dispersion in water can also be used.

### Examples

Examples of the present disclosure will be described, but the conditions in the example are one example of conditions adopted to confirm the feasibility and effects of the present disclosure, and the present disclosure is not limited to this one example of conditions. The present disclosure may adopt various conditions as long as they do not deviate from the essentials of the present disclosure and the object of the present disclosure is achieved.

### (Examples)

In order to obtain a coating layer having a chemical composition shown in Table 1, a predetermined amount of a pure metal ingot was used and melted, then a coating bath was prepared in air. A batch-wise hot-dip coating apparatus was used for forming coating layer.

Then, coating layers were formed on both sides of the substrate checkered steel sheet as follows.

The substrate checkered steel sheet was heated from room temperature by electric heating in an N₂-H₂ (5%) environment (dew point of -40°C or lower, oxygen concentration of less than 25 ppm), held for 60 seconds, then cooled to a coating bath temperature + 10°C by N₂ gas blow, and immediately immersed in the coating bath. Thereafter, the substrate checkered steel sheet was pulled up from the coating bath, and the N₂ gas wiping pressure was adjusted and the coating weight of the coating layer was adjusted. The coating weight of the coating layer on the sheet surface having the convex parts and the flat parts was as shown in Table 2.

The substrate checkered steel sheets used were hot-rolling Al-killed steel sheets, and the shapes of the substrate checkered steel sheets were the same as those shown in Figs. 1A to 1C.

However, various hot-rolling checkered steel sheets with partially different shapes (height of convex part H, maximum width of convex part C) were used as the substrate checkered steel sheet. The specific shape is as follows.
- Arrangement angle of convex parts A = 45°
- Length of the convex parts B = 25.3 mm
- Maximum width of the convex parts C = Width shown in Table 2
- Minimum width of the convex parts D = 2.5 mm
- Array pitch of the convex parts E = 28.6 mm
- Height of the convex parts (i.e., convex height) H = Height shown in Table 2

Note that the area occupancy rate of the convex parts was set at 40%.

In some examples, a Ni pre-coated checkered steel sheet obtained by Ni pre-coating the hot-rolling checkered steel sheet was used as the substrate checkered steel sheet. A deposited amount of Ni was from 1 g/m² to 3 g/m². In the example in which the Ni pre-coated checkered steel sheet was used as the substrate checkered steel sheet, "Ni pre-" was written in the column of "Substrate checkered steel sheet", "Kinds" in Table 2.

Next, under the conditions shown in Table 2, a chemical treatment coating solution was applied to the surface of the coating layer, using the coating applicator equipped with groove cut applicator rolls shown in Fig. 2, to form a chemical treatment coating film layer.

In Table 2, "angle" indicates the angle formed by the circumferential direction of the groove cut applicator roll relative to the length direction of the convex parts of the substrate checkered steel sheet.

"Linear pressure" indicates the pressing force of the groove cut applicator roll against the substrate checkered steel sheet.

Here, the chemical treatment coating solutions used are as follows.

### • Chemical Solution A

Chemical solutions containing 3-aminopropyltriethoxysilane, 3-glycidoxypropyltrimethoxysilane, vanadium oxysulfate, phosphoric acid, and zirconium fluoride acid

### • Chemical Solution B

Chemical solutions containing ammonium zirconium carbonate, acrylic resin, vanadium oxyoxalate, phosphoric acid, 1-hydroxyethane-1,1-diphosphonic acid, cobalt nitrate

### -Various Measurements-

For the resulting coated checkered steel sheet, the following items were measured according to the method described above.
- Coating thickness of chemical treatment coating film layer on the flat parts of the substrate checkered steel sheet (denoted as "flat part coating thickness T1" in the table)
- Coating thickness of chemical treatment coating film layer on the convex parts of the substrate checkered steel sheet (denoted as "convex part coating thickness T2" in the table)

### -Primary Rust Prevention-

The resulting coated checkered steel sheet was cut and a 100 mm × 50 mm sample was taken.

Next, the back and the end of the sheet surface with convex parts and the flat parts were sealed.

Then, the samples were subjected to the accelerated corrosion test (SST JIS Z 2371: 2015) for 24 hours to examine the occurrence area ratio of white rust at the convex parts and the flat parts.

The occurrence area ratio of white rust was evaluated as "A" for 10% or less, "B" for more than 10% to 20% or less, "C" for more than 20% to 30% or less, and "D" for more than 30%.

### -Appearance-

The appearance of the resulting coated checkered steel sheet was observed. Specifically, the appearance is as follows.

First, a straight tube fluorescent lamp white light source (straight tube fluorescent lamp highlight 6 type FL6W) manufactured by Panasonic Corporation was disposed at a position separated by a distance of 1 m from each checkered surface.

Next, while a checkered surface was irradiated with white light from the light source, the checkered surface in a region of 1200 mm in the width direction and 1000 mm in length was photographed every 100×100 mm.

From the reduced photograph, the color difference ΔE was measured within an area of 100×100 mm.

Specifically, the coordinate values (L*, a* and b* values) of the CIE1976L*a*b* color system were determined. Then, with respect to the average value of the L* value, the a* value, and the b* value, the color difference ΔE from the measurement point where the color difference ΔE is maximum was obtained. The color difference ΔE is defined by ΔE = ((Δa*)² + (Δb*)² + (ΔL*)2)^{1/2}.

The average color difference ΔE in the entire range (that is, the checkered surface in the region of 1200 mm in the width direction and 1000 mm in length) was measured and evaluated according to the following criteria.
A: Average of color difference ΔE is 0.6 or less
B: Average of color difference ΔE is more than 0.6 and less than 1.2
C: Average of color difference ΔE is 1.2 or more

### -Welding-

Two steel sheets of 100 mm x 50 mm were cut from the obtained coated checkered steel sheet and obtained a sample. One of the steel sheets was placed vertically at the center of the other steel sheet, and a weld bead was formed by arc welding on the side sandwiched between the checkered surfaces. Specifically, the two steel sheets were arranged with one steel sheet standing vertically in the center of the other steel sheet so that the patterns of the substrate checkered steel sheets shown in Fig. 1A were connected. In the arc welding, a weld bead having a length of 90 mm and a width of 10 mm (the build-up width (side ×√2 = 10 mm) when viewed from the 45 degree direction of welding) was formed from the 4-line intersection of the convex part of the checkered steel sheet in the direction (C direction) perpendicular to the rolling direction.

The arc welding was performed under the conditions of a welding wire: YM-28Z, a welding speed: 40 cm/min, a CO₂ shielding gas flow rate: 20 liters/min, an extension length: 15 mm, a welding wire diameter: 1.2 mm, a lamination pass: 1 time, a welding current: 170 A, and an arc voltage: 23 V.

The obtained weld bead was projected with X-rays, and the quality of welding was evaluated based on the blow hole opening ratio of the fillet welded part according to the following criteria.
A: Blow hole opening ratio is less than 3%, no wave pattern is observed nor pit hole is observed in the bead part.
B: Blow hole opening ratio is from 3 to less than 10%, pit holes of less than 1 mm are observed, but no wave pattern is observed in the bead part.
C: Blow hole opening ratio is 10% or more, pit holes of 1 mm or more size are observed, or wave patterns are observed in the bead part.

The Examples are listed in Table 1 and Table 2.

### [Table 1-1]

**Table 1-1**

| Kinds of coating layer composition | Coating layer composition (% by mass) | | | | | | | | | | | | | | | | | |
|---|---|---|---|---|---|---|---|---|---|---|---|---|---|---|---|---|---|---|
| | Zn | Al | Mg | Sn | Bi | In | Ca | Y | La | Ce | Si | Cr | Ti | Zr | Mo | W | Ag | P |
| A | 99.7 | 0.2 | 0 | 0 | 0 | 0 | 0 | 0 | 0 | 0 | 0 | 0 | 0 | 0 | 0 | 0 | 0 | 0 |
| B | 93.9 | 2.5 | 3.5 | 0 | 0 | 0 | 0 | 0 | 0 | 0 | 0 | 0 | 0 | 0 | 0 | 0 | 0 | 0 |
| C | 90.8 | 6 | 3 | 0 | 0 | 0 | 0 | 0 | 0 | 0 | 0.1 | 0 | 0 | 0 | 0 | 0 | 0 | 0 |
| D | 82.7 | 12 | 5 | 0 | 0 | 0 | 0.1 | 0 | 0 | 0 | 0.1 | 0 | 0 | 0 | 0 | 0 | 0 | 0 |
| E | 73.8 | 19.5 | 6.3 | 0 | 0 | 0 | 0.1 | 0 | 0 | 0 | 0.2 | 0 | 0 | 0 | 0 | 0 | 0 | 0 |

### [Table 1-2]

**Table 1-2**

| Kinds of coating layer composition | Coating layer composition (% by mass) | | | | | | | | | | | | | |
|---|---|---|---|---|---|---|---|---|---|---|---|---|---|---|
| | Ni | Co | V | Nb | Cu | Mn | Li | Na | K | Fe | Sr | Sb | Pb | B |
| A | 0 | 0 | 0 | 0 | 0 | 0 | 0 | 0 | 0 | 0.1 | 0 | 0 | 0 | 0 |
| B | 0 | 0 | 0 | 0 | 0 | 0 | 0 | 0 | 0 | 0.1 | 0 | 0 | 0 | 0 |
| C | 0 | 0 | 0 | 0 | 0 | 0 | 0 | 0 | 0 | 0.1 | 0 | 0 | 0 | 0 |
| D | 0 | 0 | 0 | 0 | 0 | 0 | 0 | 0 | 0 | 0.1 | 0 | 0 | 0 | 0 |
| E | 0 | 0 | 0 | 0 | 0 | 0 | 0 | 0 | 0 | 0.1 | 0 | 0 | 0 | 0 |

### [Table 2]

**Table 2**

| Category | Substrate checkered steel sheet | | | Coating layer | | Groove cut applicator roll | | | | | Chemical treatment coating film layer | | | | Primary rust prevention | | Appearance | Welding |
|---|---|---|---|---|---|---|---|---|---|---|---|---|---|---|---|---|---|---|
| | Kinds | Covex part height H | Convex part maximum width C | Kinds of composition | Deposited amount | Pitch of groove P | Height of groove H | P/H | Angle | Linear pressure | Kinds of coating solution | Flat part coating thickness T1 | Convex part coating thickness T2 | T1/ T2 | Flat part | Covex part | ΔE | Bead |
| | | (mm) | (mm) | | (g/m2) | (mm) | (mm) | | ° | g/mm | | (µm) | (µm) | | | | | |
| Example 1 | | 1.5 | 5 | A | 95 | 0.5 | 0.08 | 6.3 | 45 | 1800 | A | 1.5 | 1.0 | 1.5 | A | A | B | B |
| Example 2 | | 1.5 | 5 | B | 250 | 0.5 | 0.08 | 6.3 | 45 | 1800 | A | 1.7 | 0.9 | 1.9 | A | A | C | A |
| Example 3 | | 2.8 | 5 | B | 426 | 0.5 | 0.08 | 6.3 | 45 | 1800 | A | 0.2 | 1.0 | 0.2 | C | A | C | A |
| Example 4 | | 1.5 | 3 | B | 451 | 0.5 | 0.08 | 6.3 | 45 | 1800 | A | 0.3 | 0.5 | 0.6 | B | B | B | B |
| Example 5 | | 1.5 | 7 | B | 203 | 0.5 | 0.08 | 6.3 | 45 | 1800 | A | 1.2 | 1.5 | 0.8 | A | A | A | C |
| Example 6 | | 1.5 | 5 | C | 356 | 0.5 | 0.08 | 6.3 | 52 | 1800 | A | 0.3 | 2.0 | 0.2 | B | B | C | A |
| Example 7 | | 1.5 | 5 | C | 305 | 0.5 | 0.08 | 6.3 | 45 | 1800 | B | 3.0 | 0.7 | 4.3 | B | A | C | A |
| Example 8 | | 1.5 | 5 | D | 389 | 0.2 | 0.08 | 2.5 | 45 | 1800 | A | 0.3 | 0.4 | 0.8 | B | B | A | C |
| Example 9 | | 1.5 | 5 | D | 321 | 1.0 | 0.14 | 7.1 | 45 | 1800 | A | 4.5 | 3.0 | 1.5 | C | B | B | B |
| Example 10 | | 1.5 | 5 | D | 302 | 0.5 | 0.08 | 6.3 | 45 | 1800 | A | 1.9 | 0.8 | 2.4 | A | A | C | A |
| Example 11 | | 1.5 | 5 | E | 289 | 0.5 | 0.08 | 6.3 | 45 | 1200 | A | 0.1 | 0.4 | 0.3 | C | B | C | A |
| Example 12 | | 1.5 | 5 | E | 256 | 0.5 | 0.08 | 6.3 | 45 | 2200 | A | 1.8 | 1.7 | 1.1 | A | A | A | C |
| Example 13 | Ni pre-coated | 1.5 | 5 | E | 368 | 0.8 | 0.40 | 2.0 | 45 | 1800 | B | 2.5 | 1.0 | 2.5 | B | A | C | A |
| Example 14 | Ni pre-coated | 1.5 | 5 | E | 411 | 0.5 | 0.08 | 6.3 | 45 | 1800 | A | 0.4 | 1.1 | 0.4 | B | A | B | A |
| Comparative Example 1 | | 3.5 | 5 | B | 267 | 0.5 | 0.08 | 6.3 | 45 | 1800 | A | 0.05 | 1.0 | 0.1 | D | A | C | A |
| Comparative Example 2 | | 1.5 | 2 | B | 309 | 0.5 | 0.08 | 6.3 | 45 | 1800 | A | 0.08 | 1.1 | 0.1 | D | A | C | A |
| Comparative Example 3 | | 1.5 | 9 | B | 335 | 0.2 | 0.08 | 2.5 | 45 | 1800 | A | 0.08 | 1.3 | 0.1 | D | A | C | A |
| Comparative Example 4 | | 1.5 | 5 | D | 299 | 0.1 | 0.08 | 1.3 | 45 | 1800 | A | 0.07 | 0.2 | 0.4 | D | C | B | A |
| Comparative Example 5 | | 1.5 | 5 | D | 364 | 1.7 | 1.08 | 1.6 | 45 | 1800 | A | 0.07 | 0.2 | 0.4 | D | C | B | A |
| Comparative Example 6 | | 1.5 | 5 | D | 248 | 0.5 | 0.03 | 16.7 | 45 | 1800 | A | 0.05 | 0.1 | 0.5 | D | D | B | A |
| Comparative Example 7 | | 1.5 | 5 | C | 336 | 0.5 | 0.08 | 6.3 | 60 | 1800 | A | 6.0 | 0.3 | 20.0 | D | D | C | A |

From the results, it is found that in Examples corresponding to the coated checkered steel sheet of the present disclosure, primary rust prevention defects are suppressed in both the flat part and the convex part as compared with Comparative Examples.

Although the preferred embodiments and examples of the present disclosure have been described in detail above, the present disclosure is not limited to such examples. It is obvious that those having ordinary skill in the art to which the present disclosure belongs can conceive various changes or modifications within the scope of the technical concepts described in the claims, and it should be understood that these changes or modifications also fall within the technical scope of the present disclosure.

The entire disclosure of Japanese Patent Application No. 2022-138733 is incorporated herein by reference.

All the documents, patent applications, and technical standards cited in this specification are incorporated herein by reference to the same extent as when each individual document, patent application, or technical standard is specifically and individually indicated to be incorporated by reference.

## Claims

1. A coated checkered steel sheet, comprising:
a substrate checkered steel sheet having, on one sheet surface, convex parts with a height of 3.0 mm or less and flat parts;
a coating layer that includes a zinc-based alloy layer and that is arranged on the sheet surface of the substrate checkered steel sheet having the convex parts and the flat parts; and
a chemical treatment coating film layer provided on a surface of the coating layer;
wherein a coating thickness of the chemical treatment coating film layer on the flat parts of the substrate checkered steel sheet is from 0.10 to 5.00 µm on one surface, and
a coating thickness ratio of the chemical treatment coating film layer between the flat parts and the convex parts of the substrate checkered steel sheet (thickness of the chemical treatment coating film layer on the flat parts/thickness of the chemical treatment coating film layer on the convex parts) is from 0.2 to 5.0.

2. The coated checkered steel sheet according to claim 1, wherein the coating thickness ratio of the chemical treatment coating film layer between the flat parts and the convex parts of the substrate checkered steel sheet is 0.4 or more and 1.5 or less.

3. The coated checkered steel sheet according to claim 1 or 2, wherein the coating thickness ratio of the chemical treatment coating film layer between the flat parts and the convex parts of the substrate checkered steel sheet is 0.2 or more and less than 0.8, or 1.5 or more and 5.0 or less.
